Europäisches Patentamt

European Patent Office

Office européen des brevets

(19)

(11) **EP 1 260 832 A1**

(12) **DEMANDE DE BREVET EUROPEEN**

(43) Date de publication:
**27.11.2002 Bulletin 2002/48**

(51) Int Cl.⁷: **G01S 7/40**, G01B 11/27

(21) Numéro de dépôt: **02291223.2**

(22) Date de dépôt: **17.05.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **23.05.2001 FR 0106797**

(71) Demandeur: **Renault s.a.s.**
**92100 Boulogne Billancourt (FR)**

(72) Inventeur: **Albertus, Sébastien**
**78180 Montigny le Bretonneux (FR)**

(54) **Dispositif de vérification de l'alignement d'un radar de véhicule automobile**

(57) Dispositif de vérification de l'alignement d'un radar (2) de véhicule automobile (1) comportant des moyens de mesure (10, 12) d'un appareil de géométrie de train roulant comportant des premiers moyens de mesure (10,12) aptes à coopérer avec les roues arrières (80) dudit véhicule (1) pour déterminer l'axe de poussée du véhicule et des moyens de vérification de l'alignement dudit radar (2) par rapport à l'axe de poussée, lesdits moyens de vérification comportant une cible (20), caractérisé en ce qu'il comporte un support (22) de la cible (20) présentant des organes de positionnement (42) aptes à coopérer avec des seconds moyens de mesure (10, 12) dudit appareil de géométrie pour définir le positionnement dudit support (22) par mobilité de ce dernier jusqu'à ce qu'il soit placé selon une position déterminée mesurée par le dispositif de géométrie et en ce qu'il comporte des moyens de diagnostique (30) commandant un cycle d'actions comportant l'émission d'une onde en direction de ladite cible (20), la réception de ladite onde réfléchie sur ladite cible (20) et l'analyse les données d'émission et de réception pour déterminer l'alignement du radar (2).

FIG.1

## Description

La présente invention se rapporte à un dispositif de vérification de l'alignement d'un radar de véhicule automobile, en particulier à un dispositif comportant des moyens de mesure d'un dispositif de géométrie pour déterminer l'axe de poussée du véhicule par rapport aux roues arrières dudit véhicule et des moyens de vérification de l'alignement dudit radar par rapport à l'axe de poussée comportant une cible.

Un tel dispositif est décrit dans la demande de brevet EP 0 905 526. Dans ce dispositif, un appareil de géométrie ou banc de parallélisme sert à mesurer la position du véhicule par rapport à une direction de référence et à déterminer l'angle de l'axe de poussée du véhicule par rapport à la direction de référence. Ce dispositif comporte des moyens de mesure de la position angulaire de l'axe radioélectrique du radar par rapport à la direction de référence, en l'espèce un miroir, une source de rayonnement lumineux tel rayon un laser et des moyens de mesure de l'écart angulaire entre le rayon émis et le rayon réfléchi. Une forme de référence solidaire du radar permet de positionner la source de rayonnement selon une direction connue par rapport à l'axe radioélectrique du radar.

Le dispositif de vérification de l'alignement du radar selon le document EP 0 905 526 nécessite un positionnement précis du miroir ou de la source de rayonnement par rapport au banc de parallélisme pour pouvoir déterminer par rapport à la direction de référence tant l'angle de l'axe de poussée par l'intermédiaire du banc de parallélisme que l'angle de la cible ou de la source de rayonnement.

Le dispositif selon le document EP 0 905 526 est adapté à être utilisé dans une usine de production de véhicule mais il est trop coûteux pour être installé dans un atelier de réparation de véhicule automobile.

Le miroir nécessaire à la réflexion du rayon laser doit être de bonne qualité, au détriment du coût global de l'installation. De plus, dans un environnement tel que celui d'un atelier de réparation, le miroir risque être soumis à des salissures qui obligent les opérateur à un nettoyage méticuleux au détriment du temps d'intervention sur le véhicule. Le miroir risque aussi être détérioré en recevant un coup.

L'un des buts de l'invention est de proposer un dispositif visant à réduire les investissements spécifiques à la vérification de l'alignement du radar.

Un autre but de l'invention est de proposer un dispositif simple et rapide à utiliser par un opérateur d'atelier de réparation de véhicule.

Un autre but de l'invention est de proposer un dispositif permettant de se passer d'un miroir.

Un autre but de l'invention est de proposer un dispositif permettant la vérification de l'alignement d'un radar avec une précision au moins égale à 0,2 degrés.

Dans ce but, l'invention propose un dispositif de vérification de l'alignement d'un radar de véhicule automobile comportant des moyens de mesure d'un appareil de géométrie de train roulant comportant des premiers moyens de mesure aptes à coopérer avec les roues arrières dudit véhicule pour déterminer l'axe de poussée du véhicule et des moyens de vérification de l'alignement dudit radar par rapport à l'axe de poussée, lesdits moyens de vérification comportant une cible, caractérisé en ce qu'il comporte un support de la cible présentant des organes de positionnement aptes à coopérer avec des seconds moyens de mesure dudit appareil de géométrie pour définir le positionnement dudit support par mobilité de ce dernier jusqu'à ce qu'il soit placé selon une position déterminée mesurée par le dispositif de géométrie et en ce qu'il comporte des moyens de diagnostique commandant un cycle d'actions comportant l'émission d'une onde en direction de ladite cible, la réception de ladite onde réfléchie sur ladite cible et l'analyse les données d'émission et de réception pour déterminer l'alignement du radar.

Selon d'autres caractéristiques avantageuses de l'invention :

- le support comporte des moyens de fixation de ladite cible selon une pluralité de positions,
- le support de la cible comporte une barre transversale reliant les organes de positionnement,
- la cible comporte un organe frontal plan,
- la cible comporte une surface frontale prévue pour être inclinée par rapport à un plan perpendiculaire à l'axe de poussée du véhicule quand ladite cible est fixée sur le support,
- le dispositif comporte des moyens pour la rotation de la cible selon un axe parallèle à l'axe de poussée,
- dans le cycle d'action, les moyens de diagnostique commandent l'émission d'une onde par ledit radar en direction de ladite cible, la réception par ledit radar de ladite onde réfléchie sur ladite cible et l'analyse les données d'émission et de réception dudit radar,
- un premier cycle d'actions est effectué pour une première position de la cible et ce qu'un deuxième cycle d'actions est effectué pour une deuxième position de la cible, ladite deuxième position résultant d'une rotation à 180 degrés de la cible par rapport à la première position,
- les moyens de diagnostique comparent le niveau de réception de l'onde réfléchie du radar du premier et du deuxième cycle d'actions,
- un troisième cycle d'actions est effectué pour une troisième position de la cible, ladite troisième position résultant d'une rotation à 90 degrés de la cible par rapport à la première position et en ce qu'un quatrième cycle d'actions est effectué pour une quatrième position de la cible, ladite quatrième position résultant d'une rotation à 180 degrés de la cible par rapport à la troisième position,
- les moyens de diagnostique comparent le niveau de réception de l'onde réfléchie du radar du troisième et du quatrième cycle d'actions,

- les moyens de diagnostique déduisent le défaut d'alignement du radar de la comparaison des niveaux de réception de l'onde réfléchie du radar.

D'autres caractéristiques et avantages de l'invention apparaîtront clairement à la lecture de la description suivante d'un mode de réalisation non limitatif de celle-ci, en liaison avec les dessins annexés sur lesquels :

- la figure 1 est une vue de dessus du dispositif de vérification de l'alignement de radar selon l'invention mis en oeuvre par rapport à un véhicule,
- la figure 2 est une vue de face d'un support de la cible du dispositif selon l'invention,
- la figure 3 est un schéma de principe des mesures et des paramètres mis en oeuvre avec l'appareil de géométrie pour déterminer la position du support de la cible par rapport à l'axe de poussée du véhicule,
- la figure 4 représente schématiquement des vues de face, de droite et de dessus de la cible du dispositif selon l'invention,
- la figure 5 est une courbe illustrant le principe de contrôle de l'alignement du radar

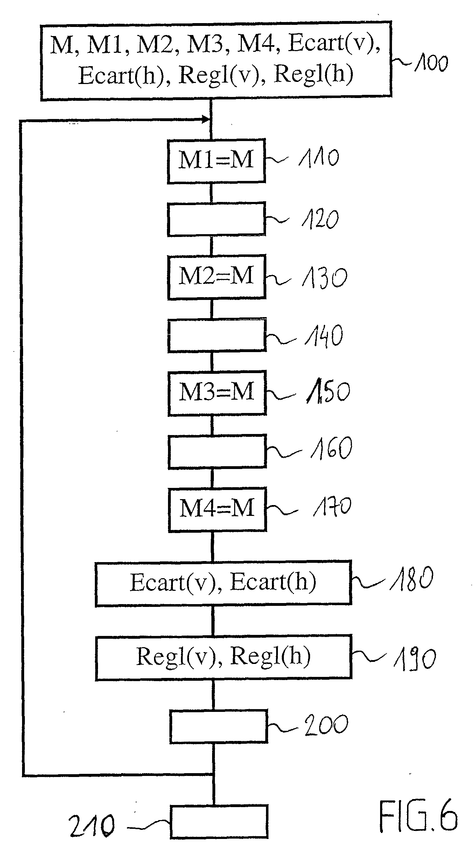

- la figure 6 est un diagramme montrant le procédé de fonctionnement pour la mise en oeuvre du dispositif selon l'invention,
- la figure 7 est une variante du support représenté à la figure 2.

Dans la description qui va suivre, les composants identiques ou analogues sont désignés par les mêmes références numériques sur l'ensemble des figures.

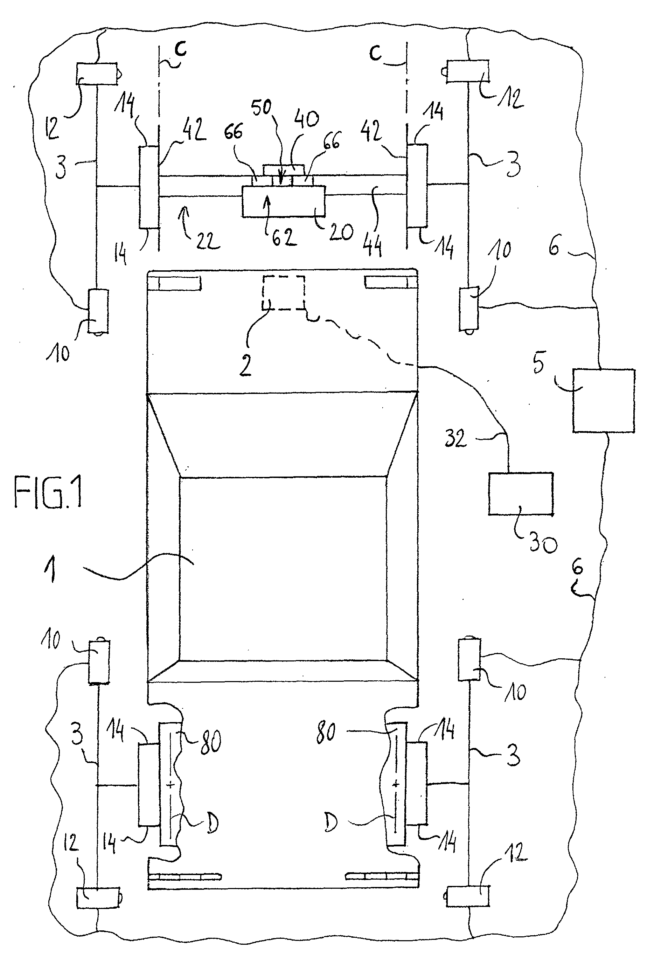

Comme illustré à la figure 1, le dispositif de vérification de l'alignement d'un radar de véhicule 1 automobile selon l'invention comporte des moyens de mesure d'un appareil de géométrie et des moyens de vérification de l'alignement du radar. Le véhicule 1 est placé sur un pont non représenté. Le radar 2 embarqué à l'avant du véhicule est représenté en trait pointillés.

L'appareil de géométrie est un appareil classique utilisé dans les ateliers de réparation pour le contrôle de la géométrie des trains roulants de véhicule.

Les moyens de mesure l'appareil de géométrie comportent quatre unités de mesure 3 et une unité centrale 5 communiquant entre eux par exemple par une liaison filaire 6.

Classiquement, chaque unité de mesure 3 porte deux capteurs numériques, un capteur longitudinal 10 et un capteur transversal 12 et des pointes de positionnement 14 apte à coopérer avec des jantes de véhicule automobile ou d'un organe équivalent.

Les moyens de vérification de l'alignement du radar 2 comportent une cible 20, un support 22 de positionnement de la cible et des moyens de diagnostique 30 pour le contrôle de l'axe radioélectrique du radar. Les moyens de diagnostique 30 sont prévus pour communiquer avec le radar 2, par exemple par une liaison filaire 32.

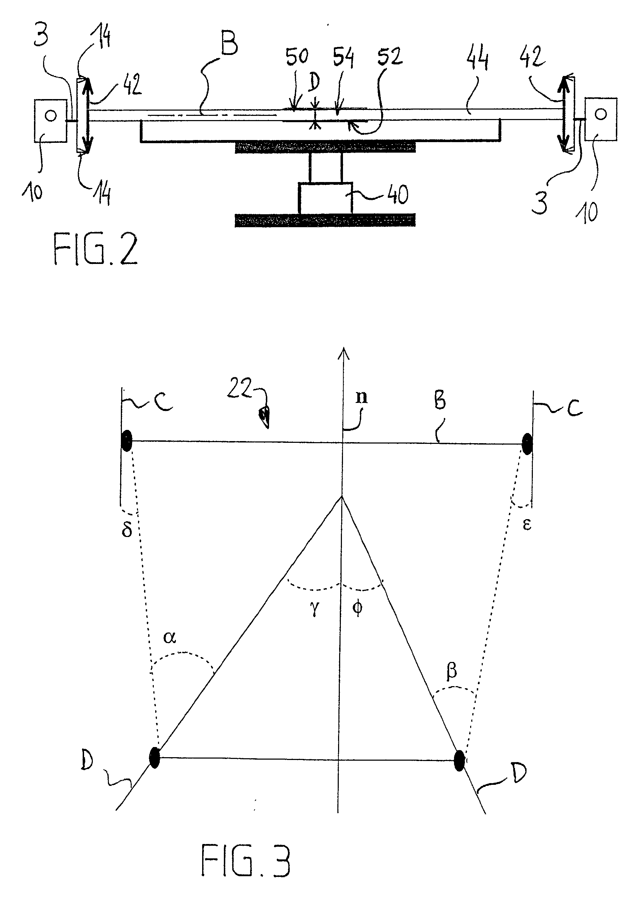

Dans le mode de réalisation représenté, le support 22 de la cible 20 comporte un pied 40 (figure 2), deux plaques longitudinales 42 et une barre transversale 44 montée sur ledit pied 40 et reliant les deux plaques longitudinales 42. La barre 44 est par exemple montée sur le pied 40 par l'intermédiaire d'une articulation (non représentée) telle que deux pivots, l'un d'axe horizontal et l'autre d'axe vertical qui peuvent être verrouillés en position. Le pied 40 est par exemple télescopique pour permettre un ajustement et un verrouillage de la hauteur de la barre 44 par rapport au sol.

Sur une portion centrale représentée en trait fort à la figure 2, la barre transversale 44 comporte deux surfaces planes parallèles distantes d'une distance D, une surface supérieure 50 et une surface inférieure 52. Les surfaces 50 et 52 sont raccordées par une surface dite avant 54.

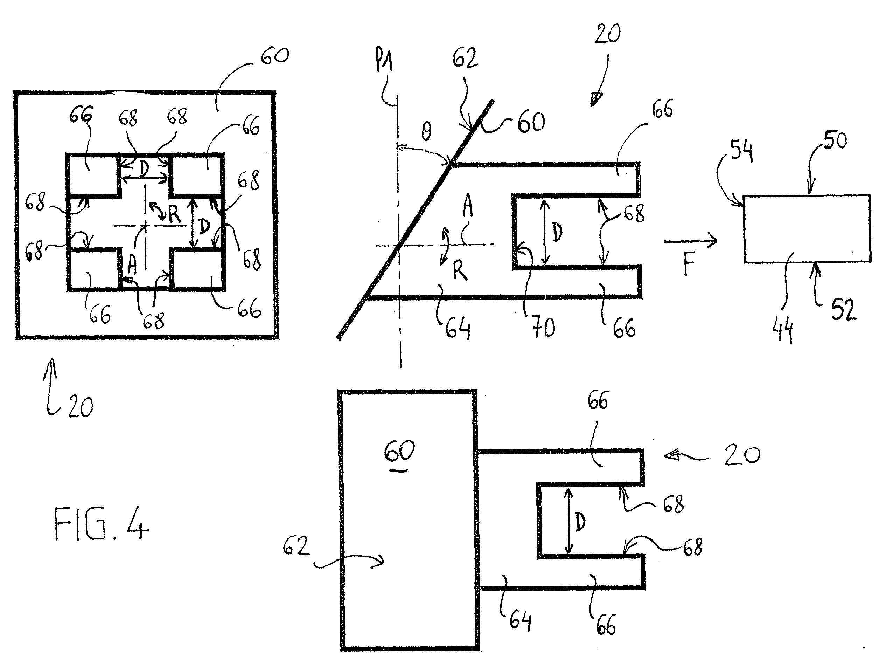

Dans le mode de réalisation représenté, la cible 20 comporte (figure 4) un organe frontal 60, en l'espèce une plaque frontale 60 présentant une surface frontale 62 plane et un corps 64 présentant quatre bras 66 par exemple de section carrée. Chaque bras 66 comporte deux faces internes 68 planes perpendiculaires.

Tel que représenté dans l'exemple de réalisation de la figure 4, chaque face interne 68 horizontale de chaque bras 66 fait face à une face interne 68 horizontale d'un premier autre bras 66, est parallèle à cette dernière et est distante de cette dernière de la distance D. Chaque face interne 68 horizontale 68 est située selon le même plan que la face interne 68 horizontale d'un deuxième autre bras 68. De même, chaque face interne 68 verticale de chaque bras 66 fait face à une face interne 68 verticale d'un premier autre bras 66, est parallèle à cette dernière et est distante de cette dernière de la distance D. Chaque face interne 68 verticale est située selon le même plan que la face interne 68 verticale d'un deuxième autre bras 68. Un axe A du corps 64 est situé à l'intersection d'un plan horizontal et d'un plan vertical situés à mi distance des faces 68 opposées horizontales et verticales des différents bras 66.

Le corps 64 comporte, à la base des bras 66 et entre leurs faces 68, une surface arrière plane 70 perpendiculaire auxdites faces 68.

La surface frontale 62 est inclinée d'un angle θ par rapport à l'axe A. Dans le mode de réalisation représenté, l'angle θ est égal à deux degrés.

Tel que représenté à la figure 4 par la flèche F, la cible 20 est prévue pour être montée sur la barre 44 au niveau des surfaces inférieure 52 et supérieure 50. Une face 68 horizontale de deux des bras 66 est en appui sur la surface supérieure 50, une face 68 horizontale de deux autres des bras 66 est en appui sur la surface inférieure 52 et la face arrière 70 est en appui contre la surface avant 54. L'axe A de la cible 20 est perpendiculaire à la face avant 54 de la barre 44.

Les bras 66 du corps 64 sont agencés de telle manière que la cible puisse être démontée de la barre 44, tournée selon l'axe A (tel que représenté par la flèche R de la figure 4) d'un quart de tour, d'un demi tour ou de trois quarts de tour puis replacée sur la barre 44. De cette manière, l'orientation de la surface frontale 62 est modifiée par rapport à la barre 44 symétriquement par rapport à un plan horizontal ou vertical.

Le dispositif selon l'invention qui vient d'être décrit est, tel que représenté à la figure 1, prévu pour être mis en oeuvre en plaçant le support de positionnement 22 de la cible 20 en face de l'avant du véhicule 1 où est installé le radar 2. La barre transversale 44 est placée transversalement au véhicule, les plaques 42 étant situées selon la direction longitudinale du véhicule. La surface frontale 62 de la cible 20 fait face à l'avant du véhicule. Elle est placée environ à 1,5 mètres du radar 2.

Deux unités de mesure 3 du dispositif de géométrie sont montées classiquement sur les jantes 80 des roues arrières du véhicule 1.

Selon l'invention, les deux autres unités de mesure 3 du banc de parallélisme sont montées sur les plaques 42 comme elles seraient montées sur des roues avant d'un véhicule pour le contrôle de la géométrie du train avant du véhicule.

Le montage des unités de mesure 3 sur les roues arrières du véhicule 1 et sur les plaques 42 sont destinées à placer la surface avant 54 de la barre 44 perpendiculairement à l'axe de poussée du véhicule 1, sachant que la surface avant 54 est parallèle à l'axe B de la barre et perpendiculaire à l'axe horizontal C des plaques 42 (figure 3).

La barre est tout d'abord positionnée à une hauteur convenable pour que les capteurs 10 des unités de mesure 3 montées sur les plaques 42 soient correctement positionnés par rapport aux capteurs 10 des unités de mesures 3 montées sur les jantes arrières 80 du véhicule 1.

La position horizontale de la barre est ensuite ajustée à l'aide d'un niveau puis le pivot d'axe horizontal est verrouillé.

Ensuite, la position de la barre 44 est ajustée en la faisant tourner par rapport au pied selon le pivot d'axe vertical. Le positionnement de la barre 44 est contrôlé par les unités de mesure 3 et l'unité centrale 5 du dispositif de géométrie. La barre 44 est verrouillé en position à la fin de l'ajustement du positionnement. Le principe du contrôle du positionnement détaillé ci-après en relation avec la figure 3 qui schématise la mise en oeuvre du dispositif objet de l'invention en relation avec dispositif de géométrie.

Les unités de mesure 3 montées sur les plaques 42 définissent l'axe horizontal C des plaques 42.

Les unités de mesure 3 montées sur les jantes 80 définissent classiquement l'axe horizontal D des jantes 80 après calcul correctif concernant le voilage des jantes 80.

Classiquement, les unités de mesures 3 et l'unité centrale 5 déterminent les angles $\delta$, $\alpha$, $\gamma$, $\phi$, $\beta$ et $\epsilon$. L'unité centrale compare les valeurs de $(\alpha-\delta)$ et $(\beta-\epsilon)$ représentative de la différence du parallélisme entre le plaque 42 gauche et la plaque 42 droite.

L'opérateur fait pivoter la barre selon l'axe du pivot vertical jusqu'à ce que l'unité centrale 5 de l'appareil de géométrie indique l'égalité du parallélisme avant gauche et du parallélisme avant droit, de laquelle il découle que la normale n à la surface frontale 54 de la barre 44 est positionnée parallèlement à l'axe de poussée du véhicule. La barre 44, et par conséquent la cible 20, sont correctement positionnées. L'opérateur verrouille le pivot d'axe vertical.

La surface frontale 62 de la plaque frontale 60 est ainsi inclinée de 2 degrés par rapport à un plan P1 perpendiculaire à l'axe de poussée du véhicule.

Avantageusement, selon l'invention, c'est le dispositif de géométrie qui sert à définir directement la position précise de la cible par rapport à l'axe de poussée du véhicule défini par la bissectrice de l'axe de chacune des roues arrières.

Dans une position de départ, la cible est positionnée sur la barre de telle façon que la surface frontale 62 soit inclinée de bas en haut en allant vers l'avant, l'avant étant défini par rapport au sens de marche avant du véhicule.

L'opérateur procède alors au contrôle de l'alignement du radar en utilisant les moyens de diagnostique 30 selon le principe ci-après exposé.

Les moyens de diagnostique commandent l'émission d'une onde par le radar 2 en direction de la cible 20 et la réception par le radar 2 de ladite onde réfléchie sur la cible 20. Ils analysent les données d'émission et de réception du radar 2 pour déterminer son alignement. L'analyse est basée sur l'intensité du signal de réception du radar 2, qui dépend de l'angle de l'onde réfléchie par rapport à l'onde incidente, en l'espèce respectivement la direction perpendiculaire à la surface frontale 62 de la cible 20 et l'axe radioélectrique du radar 2.

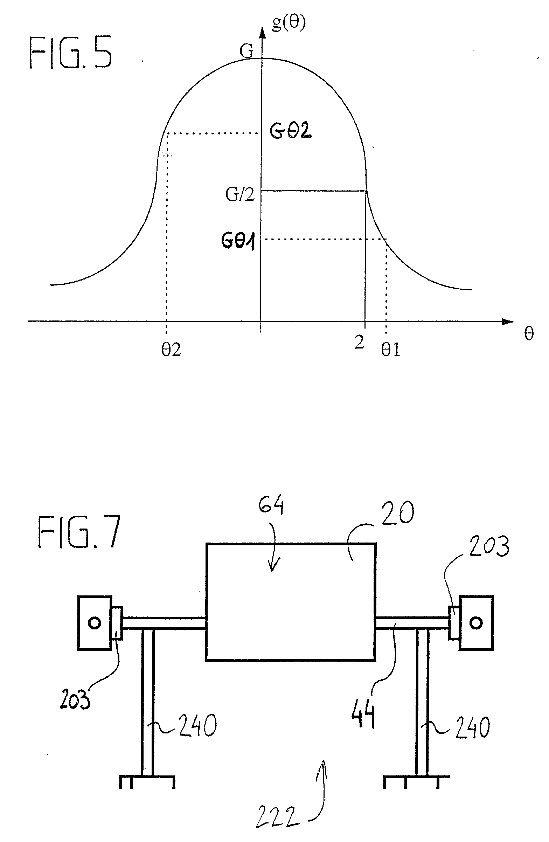

L'intensité du signal de réception du radar 2 suit, tel que représentée à la figure 5, une courbe de Gauss fonction de l'angle entre l'onde incidente émise selon l'axe radioélectrique du radar 2 et la normale à la surface réfléchissant l'onde incidente, en l'espèce la normale à la surface frontale 62.

Pour tirer parti de cette caractéristique de symétrie de l'intensité du signal de réception sur la courbe de Gauss, une première mesure de l'intensité du signal de réception est effectuée par l'unité de diagnostique pour une première position d'inclinaison de la plaque 60 par rapport au plan P1 perpendiculaire à l'axe de poussée du véhicule et une deuxième mesure est effectuée après rotation à 180 degrés de la plaque 60 selon un axe parallèle à l'axe de poussée. L'angle d'inclinaison est choisi de façon à correspondre à une portion de la courbe où une petite variation de l'angle de réception représente une grande variation de la valeur l'intensité du signal de réception. Pour déterminer le défaut d'alignement du radar selon un plan déterminé, l'outil de diagnostique compare le niveau de réception de l'onde réfléchie correspondant à la première mesure et à la deuxième mesure.

Avantageusement, l'onde émise étant une onde radar, il est inutile que la cible soit un miroir. Il suffit que la plaque frontale 60 soit un simple plaque métallique plane, au bénéfice du coût global du dispositif selon l'invention.

Selon l'exemple représenté à la figure 5, pour un angle d'inclinaison θ égal à zéro degré, l'intensité du signal de réception est maximum et égale à une valeur G. Pour un angle d'inclinaison θ égal à 2 degrés, l'intensité du signal de réception est égale à une valeur G/2. Pour un angle d'inclinaison θ proche de 2 degrés, l'intensité du signal de réception est égale à une valeur Gθ1. Pour un angle d'inclinaison θ2 proche de -2 degrés, l'intensité du signal de réception est égale à une valeur Gθ2. Le radar est aligné quand Gθ1=Gθ2=G/2.

Dans la pratique, l'opérateur procède selon plusieurs étapes d'un procédé de vérification.

Dans une étape 100, il initialise des variables M, M1, M2, M3, M4, Ecart(v), Ecart(h), Regl(v), Regl(h) mémorisées dans l'outil de diagnostique 30.

Dans une étape 110, il fait effectuer par l'outil de diagnostique 30 une première mesure dite de verticalité quand la cible 20 est dans la position de départ. L'outil de diagnostique 30 obtient une première mesure M de l'angle θ entre la normale à la surface frontale 62 et l'axe radioélectrique du radar. La première mesure M est stockée dans une variable M1.

Dans une étape 120, l'opérateur fait alors tourner la cible 20 d'un quart de tour selon le sens des aiguilles d'une montre.

Dans une étape 130, l'opérateur fait effectuer une deuxième mesure dite d'horizontalité. L'outil de diagnostique 30 obtient une deuxième mesure M de l'angle θ entre la normale à la surface frontale 62 et l'axe radioélectrique du radar. La valeur de la deuxième mesure M est stockée dans une variable M2.

Dans une étape 140, l'opérateur fait alors à nouveau tourner la cible 20 d'un quart de tour selon le sens des aiguilles d'une montre.

Dans une étape 150, l'opérateur fait effectuer une troisième mesure dite de verticalité. L'outil de diagnostique 30 obtient une troisième mesure M de l'angle θ entre la normale à la surface frontale 62 et l'axe radioélectrique du radar. La valeur de la troisième mesure M est stockée dans une variable M3.

Dans une étape 160, l'opérateur fait alors à nouveau tourner la cible 20 d'un quart de tour selon le sens des aiguilles d'une montre.

Dans une étape 170, l'opérateur fait effectuer une quatrième mesure dite d'horizontalité. L'outil de diagnostique 30 obtient une troisième mesure M de l'angle θ entre la normale à la surface frontale 62 et l'axe radioélectrique du radar. La valeur de la quatrième mesure M est stockée dans une variable M4.

Dans une étape 180, l'opérateur attend des instructions de l'outil de diagnostique 30 qui affecte à une variable Ecart(v) une valeur calculée à partir des valeurs M1 et M3 pour représenter l'écart de verticalité de l'axe radioélectrique du radar 2. L'outil de diagnostique 30 affecte à une variable Ecart(h) une valeur calculée à partir des valeurs M2 et M4 pour représenter l'écart d'horizontalité de l'axe radioélectrique du radar 2.

Dans une étape 190, l'outil de diagnostique 30 calcule une consigne de réglage vertical Regl(v) et une consigne de réglage horizontal Regl(h) du positionnement géométrique du radar 2 et communique ces consignes à l'opérateur qui effectue les réglages dans une étape 200.

L'opérateur fait alors effectuer une nouvelle série de mesures et effectue de nouveaux réglages tels que décrits précédemment entre les étapes 100 et 200.

Tant que les valeurs des variables Ecart (v) et Ecart(h) sont supérieures respectivement à un seuil S (v) et S(h), l'outil de diagnostique 30 demande à l'opérateur de recommencer les mesures et d'effectuer les réglages qui en découlent. Dans le cas contraire, l'outil de diagnostique indique à l'opérateur qu'il peut valider l'étape de fin 210.

Selon un mode de calcul, deux fonctions sont utilisées par l'outil de diagnostique 30.

$$g(\theta)=G \times e^{(-\theta 2/a)}$$

$$g'(\theta)=G \; -2\theta/a \times e^{(-\theta 2/a)}$$

Quand le radar est aligné :

$$g(\theta 1)=g(\theta 2)=G/2 \text{ ou } |\theta 1|=|\theta 2| =2°$$

il en découle qu'en ce point :

$$g(2)= G/2, \; ln2 = 4/a \text{ et } a = 4/ln2$$

et qu'en ce point

$$g'(2)= G/2x \; -ln2 \approx (g(\theta 1)-g(\theta 2))/(\theta 1-\theta 2) \text{ si } \theta 1 \text{ et}$$

$$\theta 2 \text{ sont suffisamment proches de } 2°$$

Or :

$$g(\theta 1) + g(\theta 2) \approx G \text{ et } \theta 1 - \theta 2 = 2 \times (\theta 1 - 2)$$

Donc,

$$(\theta1 - 2)x -ln2 \approx (g(\theta1)-g(\theta2))/(g(\theta1)+g(\theta2))$$

Dans les calculs,

$$Ecart(v) = (M1 - M3) / (M1 + M3)$$

$$Ecart(h) = (M2 - M4) / (M2 + M4)$$

$$S(v) = ABS(Ecart(v)) < 0.05$$

$$S(h) = ABS(Ecart(h)) < 0.05$$

Selon une variante particulièrement économique du support représentée à la figure 7, le support 222 de la cible comporte deux pieds 240 réglables en hauteur pour permettre le positionnement horizontal de la barre 44. Les unités de mesure 10 et 12 sont directement montées sur un profilé 203 disposé perpendiculairement à la barre à chaque extrémité de cette dernière. Cette variante du support ne comporte pas de pivot pour le pivotement de la barre 44 selon un axe vertical, le pivotement étant effectué par l'opérateur par déplacement d'un pied 240 du support 222 par rapport au sol.

Le pivotement de la plaque de la cible selon un axe parallèle à l'axe de poussée du véhicule peut être envisagé par tout moyen permettant de contrôler la précision de l'angle de la rotation.

**Revendications**

**1.**   Dispositif de vérification de l'alignement d'un radar (2) de véhicule automobile (1) comportant des moyens de mesure (10, 12) d'un appareil de géométrie de train roulant comportant des premiers moyens de mesure (10,12) aptes à coopérer avec les roues arrières (80) dudit véhicule (1) pour déterminer l'axe de poussée du véhicule et des moyens de vérification de l'alignement dudit radar (2) par rapport à l'axe de poussée, lesdits moyens de vérification comportant une cible (20), **caractérisé en ce qu'**il comporte un support (22) de la cible (20) présentant des organes de positionnement (42) aptes à coopérer avec des seconds moyens de mesure (10, 12) dudit appareil de géométrie pour définir le positionnement dudit support (22) par mobilité de ce dernier jusqu'à ce qu'il soit placé selon une position déterminée mesurée par le dispositif de géométrie et **en ce qu'**il comporte des moyens de diagnostique (30) commandant un cycle d'actions comportant l'émission d'une onde en direction de ladite cible (20), la réception de ladite onde réfléchie sur ladite cible (20) et l'analyse les données d'émission et de réception pour déterminer l'alignement du radar (2).

**2.**   Dispositif selon la revendication 1, **caractérisé en ce que** le support (22) comporte des moyens de fixation (44, 50, 52, 54) de ladite cible (20) selon une pluralité de positions.

**3.**   Dispositif selon l'une quelconque des revendications précédentes, **caractérisé en ce que** le support (22) de la cible comporte une barre transversale (44) reliant les organes de positionnement (42).

**4.**   Dispositif selon l'une quelconque des revendications précédentes, **caractérisé en ce que** la cible (20) comporte un organe frontal plan (60).

**5.**   Dispositif selon l'une quelconque des revendications précédentes, **caractérisé en ce que** la cible (20) comporte une surface frontale (62) prévue pour être inclinée par rapport à un plan (P1) perpendiculaire à l'axe de poussée du véhicule (1) quand ladite cible (20) est fixée sur le support (22).

**6.**   Dispositif selon la revendication 5, **caractérisé en ce qu'**il comporte des moyens (66, 68, 50, 52, 54) pour la rotation de la cible (20) selon un axe parallèle à l'axe de poussée.

**7.**   Dispositif selon l'une quelconque des revendications précédentes, **caractérisé en ce que** dans le cycle d'action, les moyens de diagnostique (30) commandent l'émission d'une onde par ledit radar (2) en direction de ladite cible (20), la réception par ledit radar (2) de ladite onde réfléchie sur ladite cible (20) et l'analyse les données d'émission et de réception dudit radar (2).

**8.**   Dispositif selon l'une quelconque des revendications 6 à 7, **caractérisé en ce qu'**un premier cycle d'actions est effectué pour une première position de la cible (20) et ce qu'un deuxième cycle d'actions est effectué pour une deuxième position de la cible (20), ladite deuxième position résultant d'une rotation à 180 degrés de la cible (20) par rapport à la première position.

**9.**   Dispositif selon la revendication 8, **caractérisé en ce que** les moyens de diagnostique (30) comparent le niveau de réception de l'onde réfléchie du radar (2) du premier et du deuxième cycle d'actions.

**10.**   Dispositif selon l'une quelconque des revendications 6 à 9, **caractérisé en ce qu'**un troisième cycle d'actions est effectué pour une troisième position de la cible (20), ladite troisième position résultant d'une rotation à 90 degrés de la cible (20) par rapport à la première position et **en ce qu'**un quatrième cycle d'actions est effectué pour une quatrième position de la cible (20), ladite quatrième position résultant d'une rotation à 180 degrés de la cible (20) par rapport à la troisième position.

**11.** Dispositif selon la revendication 10, **caractérisé en ce que** les moyens de diagnostique (30) comparent le niveau de réception de l'onde réfléchie du radar (2) du troisième et du quatrième cycle d'actions.

**12.** Dispositif selon l'une quelconque des revendications 9 et 11, **caractérisé en ce que** les moyens de diagnostique (30) déduisent le défaut d'alignement du radar (2) de la comparaison des niveaux de réception de l'onde réfléchie du radar (2).

FIG.1

FIG.2

FIG.3

FIG. 4

FIG.5

FIG.7

M, M1, M2, M3, M4, Ecart(v),
Ecart(h), Regl(v), Regl(h) — 100

M1=M — 110

— 120

M2=M — 130

— 140

M3=M — 150

— 160

M4=M — 170

Ecart(v), Ecart(h) — 180

Regl(v), Regl(h) — 190

— 200

210 —

FIG.6

**Office européen des brevets**

**RAPPORT DE RECHERCHE EUROPEENNE**

Numéro de la demande

EP 02 29 1223

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DE 198 40 307 A (BOSCH GMBH ROBERT) 16 mars 2000 (2000-03-16) | 1,2,4,5, 7 | G01S7/40 G01B11/27 |
| Y | * abrégé; figures 2,3 * | 3,6,8-12 | |
| Y | * colonne 4, ligne 24 - colonne 6, ligne 59 * | 3 | |
| Y | DE 198 57 871 C (BEISSBARTH GMBH) 26 octobre 2000 (2000-10-26) * abrégé; figures 1,4,5 * * page 4, colonne 18 - colonne 31 * * page 5, ligne 45 - page 6, ligne 28 * | 3 | |
| Y | DE 197 07 590 A (BOSCH GMBH ROBERT) 3 septembre 1998 (1998-09-03) * abrégé; figures 1,2,4,7,9 * * colonne 4, ligne 32 - ligne 50 * * colonne 5, ligne 15 - ligne 23 * * colonne 5, ligne 41 - colonne 6, ligne 24 * * colonne 8, ligne 5 - ligne 49 * | 6,8-12 | |
| A,D | EP 0 905 526 A (THOMSON CSF) 31 mars 1999 (1999-03-31) * abrégé; figure 1 * * colonne 3, ligne 9 - colonne 4, ligne 5 * | 1 | **DOMAINES TECHNIQUES RECHERCHES (Int.Cl.7)** G01S G01B |
| A | WO 01 11387 A (BAYERISCHE MOTOREN WERKE AG ;BAUER GUENTER (DE); EBERL MARKUS (DE)) 15 février 2001 (2001-02-15) * le document en entier * | 1 | |
| A,P | DE 100 01 783 C (BAYERISCHE MOTOREN WERKE AG) 20 septembre 2001 (2001-09-20) * colonne 2, ligne 40 - colonne 3, ligne 36; figures * | 1 | |

Le présent rapport a été établi pour toutes les revendications

| Lieu de la recherche | Date d'achèvement de la recherche | Examinateur |
|---|---|---|
| LA HAYE | 19 juillet 2002 | Niemeijer, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 1223

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-07-2002

| Document brevet cité au rapport de recherche | | Date de publication | . | Membre(s) de la famille de brevet(s) | | Date de publication |
|---|---|---|---|---|---|---|
| DE 19840307 | A | 16-03-2000 | DE<br>EP | 19840307<br>0984297 | A1<br>A2 | 16-03-2000<br>08-03-2000 |
| DE 19857871 | C | 26-10-2000 | DE | 19857871 | C1 | 26-10-2000 |
| DE 19707590 | A | 03-09-1998 | DE<br>WO<br>DE<br>JP<br>US | 19707590<br>9838691<br>19736307<br>2001513887<br>6363619 | A1<br>A1<br>A1<br>T<br>B1 | 03-09-1998<br>03-09-1998<br>25-02-1999<br>04-09-2001<br>02-04-2002 |
| EP 0905526 | A | 31-03-1999 | FR<br>EP | 2769085<br>0905526 | A1<br>A1 | 02-04-1999<br>31-03-1999 |
| WO 0111387 | A | 15-02-2001 | DE<br>WO<br>EP | 19936609<br>0111387<br>1198723 | A1<br>A1<br>A1 | 15-03-2001<br>15-02-2001<br>24-04-2002 |
| DE 10001783 | C | 20-09-2001 | DE<br>EP<br>US | 10001783<br>1118494<br>2001008446 | C1<br>A2<br>A1 | 20-09-2001<br>25-07-2001<br>19-07-2001 |

EPO FORM P0460